(19) **Europäisches Patentamt** / **European Patent Office** / **Office européen des brevets**

(11) **EP 4 311 704 A1**

(12) **EUROPEAN PATENT APPLICATION**
published in accordance with Art. 153(4) EPC

(43) Date of publication:
**31.01.2024 Bulletin 2024/05**

(21) Application number: **21932803.6**

(22) Date of filing: **31.12.2021**

(51) International Patent Classification (IPC):
*B60K 35/00* (2024.01)     *B60W 40/00* (2006.01)

(86) International application number:
**PCT/CN2021/143761**

(87) International publication number:
**WO 2022/199196 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.03.2021 CN 202110319453**

(71) Applicant: **Great Wall Motor Company Limited Hebei 071000 (CN)**

(72) Inventors:
  • **HAO, Kuankuan**
    **Baoding, Hebei 071000 (CN)**
  • **LIU, Che**
    **Baoding, Hebei 071000 (CN)**
  • **XIN, Ran**
    **Baoding, Hebei 071000 (CN)**
  • **MENG, Xiangwu**
    **Baoding, Hebei 071000 (CN)**
  • **WANG, Zexing**
    **Baoding, Hebei 071000 (CN)**

(74) Representative: **dompatent von Kreisler Selting Werner - Partnerschaft von Patent- und Rechtsanwälten mbB Deichmannhaus am Dom Bahnhofsvorplatz 1 50667 Köln (DE)**

(54) **METHOD AND SYSTEM FOR DISPLAYING TORQUES OF FRONT AND REAR AXLES OF FOUR-WHEEL DRIVE VEHICLE, AND VEHICLE**

(57) Disclosed is a method for displaying the torques of front and rear axles of a four-wheel drive vehicle, the method comprising: collecting vehicle operation information by means of a vehicle CAN network; determining a pre-set condition on the basis of the collected vehicle operation information; when a determination result for the pre-set condition satisfies a requirement, calculating the torques distributed for a front axle and a rear axle; and displaying a torque distribution result for the front axle and the rear axle that is obtained by means of calculation. By means of the method, torque distribution for front and rear axles can be visually displayed, such that a driver directly perceives a four-wheel drive state, and the playability of a four-wheel drive vehicle can be improved. Further disclosed are a system for displaying front and rear torques of a four-wheel drive vehicle, and a vehicle.

```
┌─────────────────────────────────────┐
│ acquiring vehicle operation information │
└─────────────────────────────────────┘
                  │
                  ▼
          ╱────────────────╲
         ╱ judging a preset  ╲      no    ┌──────────────────────────────────┐
        ⟨ condition based on the ⟩──────▶│ skipping displaying the front axle torque │
         ╲ vehicle operation     ╱        │ and the rear axle torque               │
          ╲ information         ╱         └──────────────────────────────────┘
           ╲──────────────────╱
                  │ yes
                  ▼
┌──────────────────────────────────┐
│ calculating a torque distributed at a │
│ front axle and a torque distributed at a │
│ rear axle                          │
└──────────────────────────────────┘
                  │
                  ▼
┌──────────────────────────────────┐
│ displaying the front axle torque and the │
│ rear axle torque                   │
└──────────────────────────────────┘
```

FIG. 1

EP 4 311 704 A1

**Description**

This application claims the priority of a Chinese patent application with application number 202110319453.0 and titled "Method and system for displaying front axle torque and rear axle torque of four-wheel drive vehicle, and vehicle" filed with the China Patent Office on Mar. 25, 2021, the entire contents of which are incorporated herein by reference.

TECHNICAL FIELD

The present application relates to the technical field of four-wheel drive vehicles, and more particularly to a method for displaying a front axle torque and a rear axle torque of a four-wheel drive vehicle. The present application also relates to a system for displaying a front axle torque and a rear axle torque of a four-wheel drive vehicle. Meanwhile, the present application further relates to a vehicle.

BACKGROUND

With the improvement of people's living standards, vehicles are no longer just for the purpose of transportation, but higher and higher requirements have been imposed on their power, comfort, playability, and the like. Four-wheel drive vehicles have been accepted and applauded by more people because of their excellent power, passability, and playability. However, due that the existing four-wheel drive vehicles mostly adopt compression degree of the friction pieces to distribute the front axle torque and the rear axle torque, it is difficult for the driver to perceive the four-wheel drive state, which greatly reduces the playability of the vehicle.

SUMMARY

In view of this, it is an object of the present application to propose a method for displaying a front axle torque and a rear axle torque of a four-wheel drive vehicle, so as to visually reflect the torque distribution at the front axle and the rear axle, and improve the playability of the four-wheel drive vehicle.

In order to achieve the above object, the technical solution of the present application is achieved as follows:

A method for displaying a front axle torque and a rear axle torque of a four-wheel drive vehicle. The method comprises:

   acquiring vehicle operation information through a vehicle controller area network (CAN);

   judging a preset condition based on the acquired vehicle operation information;

   calculating a torque distributed at a front axle and a torque distributed at a rear axle when a judgment result of the preset condition satisfies a requirement; and

   displaying calculated torque distribution results at the front axle and at the rear axle.

Furthermore, the acquired vehicle operation information comprises: a brake pedal signal, an electronic handbrake signal, a vehicle speed signal, an accelerator pedal position signal, and a transmission gear signal. In case that the brake pedal signal indicates that a brake pedal has been depressed, or the electronic handbrake signal indicates that an electronic handbrake is turned on, or the vehicle speed signal and the accelerator pedal signal are both 0, or the transmission gear signal indicates that a transmission gear is in a neutral (N) gear or a parking (P) gear, it is skipped displaying the front axle torque and the rear axle torque.

Furthermore, the torque distribution results at the front axle and the rear axle are displayed in percentage; and in case that the calculated torque distribution results at the front axle and the rear axle are greater than 1, the torque distribution results at the front axle and the rear axle are displayed to be 100%, and/or, in case that the calculated torque distribution results at the front axle and the rear axle satisfy > 0% and $\leq$ X%, the torque distribution results at the front axle and the rear axle are both displayed to be X %, in which $5 \leq X \leq 15$.

Furthermore, in case that the preset condition comprises and satisfies: an engine malfunction indicator light being off, no transmission drive warning information being collected, no transmission drive failure information being collected, a vehicle speed signal being not equal to 0, and an accelerator pedal position signal being not equal to 0; the torque distribution result at the front axle Fs is:

$$Fs = \{T_1 * (\text{accelerator pedal position} / 100) / T_2 * [(\text{left rear wheel speed} + \text{right rear wheel speed}) / (\text{left front wheel speed} + \text{right front wheel speed})] * [1 - |(\text{left front wheel speed} - \text{right front wheel speed})| / (\text{left front wheel speed} + \text{right front wheel speed})] * K_1\}\%;$$

in which, $T_1$ and $T_2$ are optional values, and $T_1$ is between 0 Nm and 510 Nm, $T_2$ is between 280 and 350, $K_1$ is a coefficient, and $K_1$ is between 0 and 1.5.

Furthermore, in case that the preset condition comprises and satisfies: an engine malfunction indicator light being off, no transmission drive warning information being collected, no transmission drive failure information being collected, a vehicle speed signal being equal to 0, and an accelerator pedal position signal being not equal to 0; the torque distribution result Fs at the front axle is:

$$Fs = [T_1 * (\text{accelerator pedal position} / 100) / T_2 * K_2]\%;$$

in which, $T_1$ and $T_2$ are optional values, $T_1$ is between 0 Nm and 510 Nm, $T_2$ is between 280 and 350, $K_2$ is a coefficient, and $K_2$ is between 0 and 1.5.

Furthermore, in case that the preset condition comprises and satisfies: an engine malfunction indicator light being off, no transmission drive warning information being collected, no transmission drive failure information being collected, a vehicle speed signal being not equal to 0, and an accelerator pedal position signal being equal to 0; the torque distribution result Fs at the front axle is:

$$Fs = \{\text{transmission load torque} / 100 * [(\text{left rear wheel speed} + \text{right rear wheel speed}) / (\text{left front wheel speed} + \text{right front wheel speed})] * [1 - |(\text{left front wheel speed} - \text{right front wheel speed})| / (\text{left front wheel speed} + \text{right front wheel speed})] * K_3\}\%;$$

in which, $K_3$ is a coefficient, $K_3$ is between 0 and 1.5; and the transmission load torque is defined as 0 when the transmission load torque $\leq Y$, in which, Y is between 0 Nm and 15 Nm.

Furthermore, in case that the preset condition comprises and satisfies: an engine malfunction indicator light being on, or a transmission drive warning information being collected, or a transmission drive failure information being collected, a vehicle speed signal being not equal to 0, and an engine output torque being $\geq 0$; the torque distribution result Fs at the front axle is:

$$Fs = \{T_3 * (\text{engine output torque} / 100) / T_2 * [(\text{left rear wheel speed} + \text{right rear wheel speed}) / (\text{left front wheel speed} + \text{right front wheel speed})] * [1 - |(\text{left front wheel speed} - \text{right front wheel speed})| / (\text{left front wheel speed} + \text{right front wheel speed})] * K_4\}\%;$$

in which, $T_2$ and $T_3$ are optional values, $T_2$ is between 280 and 350, and $T_3$ is between 0 Nm and 510 Nm; $K_4$ is a coefficient, and $K_4$ is between 0 and 1.5.

Furthermore, in case that the preset condition comprises and satisfies: an engine malfunction indicator light being on, or a transmission drive warning information being collected, or a transmission drive failure information being collected, a vehicle speed signal being equal to 0, and an engine output torque being $\geq 0$; the torque distribution result Fs at the front axle is:

$$Fs = [T_3 * (\text{engine output torque} / 100) / T_2 * K_5]\%;$$

in which, $T_2$ and $T_3$ are optional values, and $T_2$ is between 280 and 350, and $T_3$ is between 0 Nm and 510 Nm; $K_5$ is a coefficient, and $K_5$ is between 0 and 1.5.

Furthermore, in case that the preset condition comprises and satisfies: an engine malfunction indicator light being on, or a transmission drive warning information being collected, or a transmission drive failure information being collected, and an engine output torque being < 0; the torque distribution result Fs at the front axle is:

$$Fs = 0.$$

Furthermore, in case that the preset condition comprises and satisfies: (left front wheel speed + right front wheel speed) being not equal to 0, and an accelerator pedal position signal being not equal to 0; the torque distribution result Rs at the rear axle being a smaller value of Rs1 and Rs2, in which:

$$Rs1 = \{ \text{torque estimated by torque manager} * [1 - |(\text{left rear wheel speed - right rear wheel speed})| / (\text{left rear wheel speed + right rear wheel speed})] / 1000 * K_6\}\%;$$

and

$$Rs2 = \{T_1 * (\text{accelerator pedal position} / 100) / T_2 * [(\text{left rear wheel speed + right rear wheel speed}) / (\text{left front wheel speed + right front wheel speed})] * [1 - |(\text{left front wheel speed - right front wheel speed})| / (\text{left front wheel speed + right front wheel speed})] * K_1\}\%;$$

in which, $T_1$ and $T_2$ are optional values, $T_1$ is between 0 Nm and 510 Nm, and $T_2$ is between 280 and 350; $K_1$ and $K_6$ are coefficients, and both $K_1$ and $K_6$ are between 0 and 1.5; and

in case that the preset condition comprises and satisfies that (left front wheel speed + right front wheel speed) is equal to 0, it is skipped displaying the torque distribution result Rs at the rear axle.

Furthermore, in case that the preset condition comprises and satisfies: (left rear wheel speed + right rear wheel speed) being not equal to 0 and an accelerator pedal position being equal to 0; the torque distribution result Rs at the rear axle is a smaller value of Rs3 and Rs4, in which:

$$Rs3 = \{\text{torque estimated by torque manager} * [1 - |(\text{left rear wheel speed - right rear wheel speed})| / (\text{left rear wheel speed + right rear wheel speed})] / 1000 * K_6\}\%;$$

$$Rs4 = \{\text{transmission load torque} / 100 * [(\text{left rear wheel speed + right rear wheel speed}) / (\text{left front wheel speed + right front wheel speed})] * [1 - |(\text{left front wheel speed - right front wheel speed})| / (\text{left front wheel speed + right front wheel speed})] * K_3\}\%;$$

in which, $K_3$ and $K_6$ are coefficients, both $K_3$ and $K_6$ are between 0 and 1.5; and the transmission load torque is defined as 0 when the transmission load torque $\leq Y$, in which, Y is between 0 Nm and 15 Nm;

in case that the preset condition comprises and satisfies: (left rear wheel speed + right rear wheel speed) being equal to 0, it is skipped displaying the torque distribution result Rs at the rear axle.

Furthermore, in case that the preset condition comprises and satisfies: (left rear wheel speed + right rear wheel speed) being equal to 0 and an accelerator pedal position being not equal to 0; the torque distribution result Rs at the rear axle is:

$$Rs = \{\text{torque manager estimated torque} / 1000 * K_7\}\%;$$

in which, $K_7$ is a coefficient, and $K_7$ is between 0 and 1.5.

Compared with the prior art, advantages of the present application are summarized as follows:

In the method for displaying the front axle torque and the rear axle torque of the four-wheel drive vehicle in the present application, the vehicle operation information is acquired through the vehicle CAN; a preset condition is judged based on the acquired vehicle operation information; when a judgment result of the preset condition satisfies a requirement, a torque distributed at a front axle and a torque distributed at a rear axle are calculated; and torque distribution results at the front axle and the rear axle are displayed. In this way, the torque distribution at the front axle and the rear axles can be displayed visually, which enables the driver to directly perceive the four-wheel drive state, and can improve the playability of the four-wheel drive vehicle.

Furthermore, it is another object of the present application to provide a system for displaying a front axle torque and a rear axle torque of a four-wheel drive vehicle.

The system is located on the vehicle, and comprises:

an acquisition unit, the acquisition unit being configured for acquiring vehicle operation information through a vehicle controller area network;

a processing unit, the processing unit being configured for judging a preset condition based on the acquired vehicle operation information, and calculating a torque distributed at a front axle and a torque distributed at a rear axle when a judgment result of the preset condition satisfies a requirement; and

a display unit, the display unit being configured for displaying calculated torque distribution results at the front axle and at the rear axle.

Furthermore, the display unit is a central control display or a dashboard display of the vehicle.

In the system for displaying the front axle torque and the rear axle torque of the four-wheel drive vehicle, the torque distribution at the front axle and the rear axles can be displayed visually, which enables the driver to directly perceive the four-wheel drive state, and can improve the playability of the four-wheel drive vehicle, thus having excellent usability.

The present application further provides a vehicle. The vehicle is provided with the above-described system for displaying the front axle torque and the rear axle torque of the four-wheel drive vehicle.

DESCRIPTION OF THE DRAWINGS

The accompanying drawings constituting a part of the present application are used to provide a further understanding of the present application, and the schematic embodiments and descriptions of the present application are used to explain the present application, and do not constitute improper limitations to the present application. In the attached drawings:

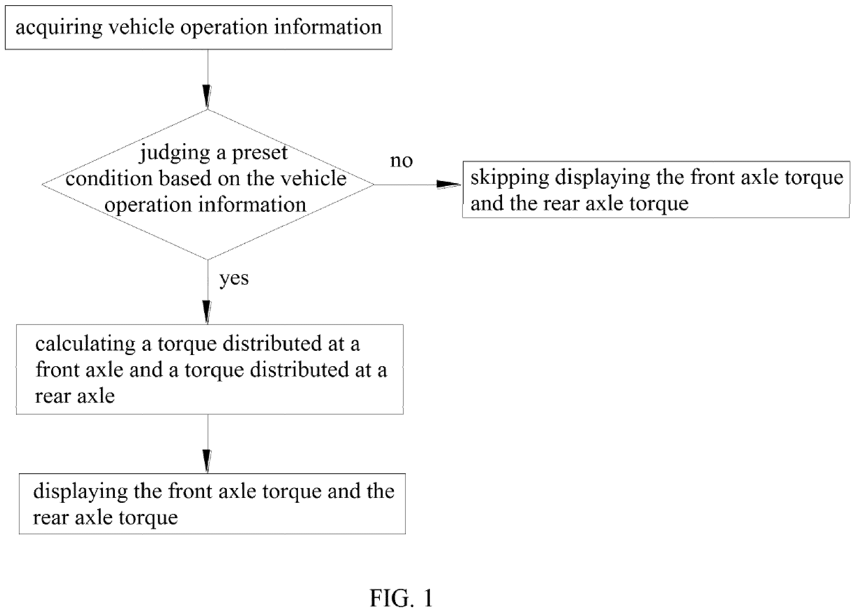

FIG. 1 is a flowchart of a method for displaying a front axle torque and a rear axle torque of a four-wheel drive vehicle according to an embodiment of the present application; and

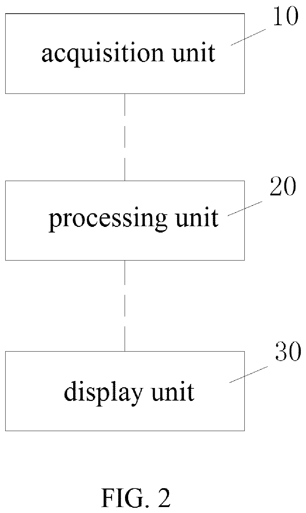

FIG. 2 is a schematic diagram of the composition of a system for displaying a front axle torque and a rear axle torque of a four-wheel drive vehicle according to an embodiment of the present application.

Explanation of reference numerals:

10. Acquisition unit; 20. Processing unit; and 30. Display unit.

DETAILED DESCRIPTION OF THE DRAWINGS

It should be noted that, in the case of no conflict, the embodiments in the present application and the features in the embodiments can be combined with each other.

In the description of the present application, it should be noted that in cases of the appearance of terms such as "upper", "lower", "inside", and "outer", indicating orientation or position relationship, such terms are based on the orientation or positional relationship shown in the accompanying drawings, and are only for the convenience of describing the present application and simplifying the description, rather than indicating or implying that the referred device or element must have a specific orientation, be constructed or operated in a specific orientation, and thus should not be construed as limiting the present application. In addition, in case of appearance of terms such as "first" and "second", such terms are used for descriptive purposes only, and cannot be understood as indicating or implying relative importance.

In addition, in the description of the present application, unless otherwise clearly defined, the terms "installation", "connection", "connected", and "connector" should be interpreted broadly. For example, it can be a fixed connection, a detachable connection, or an integral connection; it can be a mechanical connection or an electrical connection; it can be a direct connection or an indirect connection through a medium. Those of ordinary skill in the art can understand the specific meanings of the above terms in the present application in combination with specific situations.

Embodiments firstly relate to a method for displaying a front axle torque and a rear axle torque of a four-wheel drive vehicle. The method is applicable to a four-wheel drive vehicle, particularly a four-wheel drive vehicle having a transverse power all-wheel drive, and can display the front axle torque and the rear axle torque, such that the torque distribution at the front axle and the rear axles can be displayed visually, which enables the driver to directly perceive the four-wheel drive state, and can improve the playability of the four-wheel drive vehicle.

In terms of the overall technical solution, a method for displaying a front axle torque and a rear axle torque of a four-wheel drive vehicle comprises: acquiring vehicle operation information through a vehicle controller area network (CAN); judging a preset condition based on the acquired vehicle operation information; calculating a torque distributed at a front axle and a torque distributed at a rear axle when a judgment result of the preset condition satisfies a requirement; and displaying calculated torque distribution results at the front axle and at the rear axle.

The acquired vehicle operation information through the vehicle CAN in this embodiment generally includes: an engine failure indicator signal, a transmission drive warning information, a transmission drive failure information, a vehicle speed signal, an accelerator pedal position signal, a transmission load torque, a left front wheel speed, a right front wheel speed, a left rear wheel speed, a right rear wheel speed, and a torque estimated by a torque manager, etc. Moreover, in this embodiment, the torque distribution results at the front axle and the rear axle obtained by the above calculation are also generally displayed through the multimedia interface or the dashboard interface of the vehicle.

In the above information, the engine malfunction indicator signal and the accelerator pedal position signal can be collected by an engine control unit (ECM), the transmission drive warning signal, the transmission drive failure information, and the transmission load torque can be collected by the transmission, and the transmission in this embodiment is specifically an automatic transmission, and for example a dual clutch automatic transmission (DCT). The wheel signal and the speed of each wheel can be collected by an electronic stability system (ESP), and the torque estimated by the torque manager can be collected by the intelligent full-time four-wheel drive system (Haldex) on the four-wheel drive vehicle.

The above signals can be collected by the vehicle controller through the transmission of the CAN network, and the vehicle controller can execute the display strategy of the embodiments to realize the display of the front axle torque and the rear axle torque.

Before describing the display method in detail, it should be noted that, in addition to the aforementioned operating signals, in an embodiment, the acquired vehicle operation information further comprises: a brake pedal signal, an electronic handbrake signal, and a transmission gear signal. In such condition, as a precondition of the overall display method, it is also set in this embodiment that in case that the brake pedal signal indicates that a brake pedal has been depressed, or the electronic handbrake signal indicates that an electronic handbrake is turned on, or the vehicle speed signal and the accelerator pedal position signal are both 0, or the transmission gear signal indicates that a transmission gear is in an N gear or a P gear, it is skipped displaying the front axle torque and the rear axle torque on a multimedia interface or a dashboard interface.

In addition, except that the front axle torque and the rear axle torque are not displayed under the above conditions, in some embodiments, when the Coding values of the collected signals are invalid values, or when the collected signals have signal losses, the front axle torque and the rear axle torque are certainly not displayed.

When the front axle torque and the rear axle torque can be displayed, as a preferred implementation form, it is also set in this embodiment that the torque distribution results at the front axle and the rear axle are displayed in percentage. The displayed range in percentage is between 0% and 100%, and can usually be displayed on the display interface as a dynamically changeable bar graph, fan graph, or other various graphs. Moreover, in case that the torque distribution results at the front axle and the rear axle calculated hereinbelow are greater than 1, the torque distribution results at the front axle and the rear axle are displayed to be 100%. Meanwhile, in case that the torque distribution results at the front axle and the rear axle calculated hereinbelow satisfy > 0% and $\leq$ X%, the torque distribution results at the front axle and the rear axle are both displayed to be X %, in which, $5 \leq X \leq 15$. In actual implementation, a value of X can generally be 10, or can be verified and adjusted according to the actual vehicle display effect.

In addition, it should be noted that in embodiments, the display of the torque distribution results at the front axle and the rear axle is preferably displayed through the vehicle multimedia interface, so as to obtain a more vivid display effect. Moreover, on the display interface of the vehicle, the display of the front axle torque and the rear axle torque in embodiments can be usually used as a calling function, rather than as an interface directly displaying the content. In use, the display function can be controlled through the HUT virtual switch.

In some embodiments, regarding the preset conditions and the judgment thereof in the above overall display method, the preset condition generally includes limitations on the engine failure indicator signal, the transmission drive warning information, the transmission drive failure information, the vehicle speed signal, the accelerator pedal position signal, the left front wheel speed, the right front wheel speed, the left rear wheel speed, the right rear wheel speed, and the like, among the above collected operation information.

Meanwhile, in addition to the above information, the preset conditions in some embodiments further include limitations on the output torque of the engine, which is also collected through the CAN network. The judgment of the preset conditions can be performed according to the judgment conditions corresponding to the calculation formulas for the front axle torque and rear axle torque, and it can be seen from the corresponding judgment conditions of the following calculation formulas that the preset conditions also correspond to different vehicle operation conditions.

However, in addition to the calculation formulas for the front axle torque and rear axle torque as described below, and the preset conditions and judgments corresponding to the formulas, other conditions can also be set, and it is also possible to calculate the front axle torque and rear axle torque by using the corresponding calculation methods.

In some embodiments, based on the display of the front axle torque and the rear axle torque in percentage, and combining with the above overall introduction to the display method, the distributed torque of the front axle and the rear axle to be displayed is calculated, which is specifically as follows, and based on the calculation formulas for the torque distribution results at the front axle or the rear axle, the dynamic display of the torque distributions at the front axle and the rear axle under different vehicle operation conditions can be realized.

It should be firstly explained here that $T_1$, $T_2$, and $T_3$ in the following calculation formulas are optional values, and ranges of $T_1$ and $T_3$ are between 0 Nm and 510 Nm, and a range of $T_2$ is between 280 and 350. Moreover, during specific implementation, initial setting values of $T_1$ and $T_2$ may be 320 Nm, for example, and the initial setting value of $T_3$ may be 400 Nm.

In the following calculation formulas, $K_1$, $K_2$, $K_3$, $K_4$, $K_5$, $K_6$, and $K_7$ are coefficients, and a range of each coefficient is between 0 and 1.5, and in specific implementation, the initial setting value may be 1.1, for example.

The value range of the following transmission load torque is >Y, when the transmission load torque ≤ Y, the transmission load torque is defined as 0, in which, Y is specifically between 0 Nm and 15 Nm, and the initial setting value can be 0.01 during specific implementation.

(FIRST) Regarding torque distribution at the front axle

1. In case that the preset condition comprises and satisfies: an engine malfunction indicator light being off, no transmission drive warning information being collected, no transmission drive failure information being collected, a vehicle speed signal being not equal to 0, and an accelerator pedal position signal being not equal to 0; the torque distribution result at the front axle Fs is:

$$Fs = \{T_1 * (\text{accelerator pedal position} / 100) / T_2 * [(\text{left rear wheel speed} + \text{right rear wheel speed}) / (\text{left front wheel speed} + \text{right front wheel speed})] * [1 - |(\text{left front wheel speed} - \text{right front wheel speed})| / (\text{left front wheel speed} + \text{right front wheel speed})] * K_1\}\%.$$

2. In case that the preset condition comprises and satisfies: an engine malfunction indicator light being off, no transmission drive warning information being collected, no transmission drive failure information being collected, a vehicle speed signal being equal to 0, and an accelerator pedal position signal being not equal to 0; the torque distribution result Fs at the front axle is:

$$Fs = [T_1 * (\text{accelerator pedal position} / 100) / T_2 * K_2]\%.$$

3. In case that the preset condition comprises and satisfies: an engine malfunction indicator light being off, no transmission drive warning information being collected, no transmission drive failure information being collected, a vehicle speed signal being not equal to 0, and an accelerator pedal position signal being equal to 0; the torque distribution result Fs at the front axle is:

$$Fs = \{\text{transmission load torque} / 100 * [(\text{left rear wheel speed} + \text{right rear wheel speed}) /$$
$$(\text{left front wheel speed} + \text{right front wheel speed})] * [1 - |(\text{left front wheel speed} - \text{right front}$$
$$\text{wheel speed})| / (\text{left front wheel speed} + \text{right front wheel speed})] * K_3\}\%.$$

4. In case that the preset condition comprises and satisfies: an engine malfunction indicator light being on, or a transmission drive warning information being collected, or a transmission drive failure information being collected, a vehicle speed signal being not equal to 0, and an engine output torque being $\geq$ 0; the torque distribution result Fs at the front axle is:

$$Fs = \{T_3 * (\text{engine output torque} / 100) / T_2 * [(\text{left rear wheel speed} + \text{right rear wheel}$$
$$\text{speed}) / (\text{left front wheel speed} + \text{right front wheel speed})] * [1 - |(\text{left front wheel speed} - \text{right}$$
$$\text{front wheel speed})| / (\text{left front wheel speed} + \text{right front wheel speed})] * K_4\}\%.$$

Moreover, in such condition, when a transmission gear signal indicates a state of being shifting the gear, and the current transmission gear is not in the N gear or the P gear, the calculated torque distribution result at the front axle maintains the torque calculation value under the current transmission gear.

5. In case that the preset condition comprises and satisfies: an engine malfunction indicator light being on, or a transmission drive warning information being collected, or a transmission drive failure information being collected, a vehicle speed signal being equal to 0, and an engine output torque being $\geq$ 0; the torque distribution result Fs at the front axle is:

$$Fs = [T_3 * (\text{engine output torque} / 100) / T_2 * K_5]\%.$$

6. In case that the preset condition comprises and satisfies: an engine malfunction indicator light being on, or a transmission drive warning information being collected, or a transmission drive failure information being collected, and an engine output torque being < 0; the torque distribution result Fs at the front axle is:

$$Fs = 0.$$

(SECOND) Regarding torque distribution at the rear axle

1. In case that the preset condition comprises and satisfies: (left front wheel speed + right front wheel speed) being not equal to 0, and an accelerator pedal position signal being not equal to 0; the torque distribution result Rs at the rear axle being a smaller value of Rs1 and Rs2, in which:

$$Rs1 = \{ \text{torque estimated by torque manager} * [1 - |(\text{left rear wheel speed} - \text{right rear}$$
$$\text{wheel speed})| / (\text{left rear wheel speed} + \text{right rear wheel speed})] / 1000 * K_6\}\%;$$

and

$$Rs2 = \{T_1 * (\text{accelerator pedal position} / 100) / T_2 * [(\text{left rear wheel speed} + \text{right rear}$$
$$\text{wheel speed}) / (\text{left front wheel speed} + \text{right front wheel speed})] * [1 - |(\text{left front wheel speed} -$$
$$\text{right front wheel speed})| / (\text{left front wheel speed} + \text{right front wheel speed})] * K_1\}\%.$$

And in case that the preset condition comprises and satisfies that (left front wheel speed + right front wheel speed) is equal to 0, it is skipped displaying the torque distribution result Rs at the rear axle on a multimedia interface or a dashboard interface on the vehicle.

2. In case that the preset condition comprises and satisfies: (left rear wheel speed + right rear wheel speed) being not equal to 0 and an accelerator pedal position being equal to 0; the torque distribution result Rs at the rear axle is a smaller value of Rs3 and Rs4:

$$Rs3 = \{\text{torque estimated by torque manager} * [1 - |(\text{left rear wheel speed - right rear wheel speed})| / (\text{left rear wheel speed + right rear wheel speed})] / 1000 * K_6\}\%;$$

$$Rs4 = \{\text{transmission load torque} / 100 * [(\text{left rear wheel speed + right rear wheel speed}) / (\text{left front wheel speed + right front wheel speed})] * [1 - |(\text{left front wheel speed - right front wheel speed})| / (\text{left front wheel speed + right front wheel speed})] * K_3\}\%.$$

And in case that the preset condition comprises and satisfies: (left rear wheel speed + right rear wheel speed) being equal to 0, it is skipped displaying the torque distribution result Rs at the rear axle on a multimedia interface or a dashboard interface on the vehicle.

3. In case that the preset condition comprises and satisfies: (left rear wheel speed + right rear wheel speed) being equal to 0 and an accelerator pedal position being not equal to 0; the torque distribution result Rs at the rear axle is:

$$Rs = \{\text{torque manager estimated torque} / 1000 * K_7\}\%.$$

Through the calculation of the front axle torque and the rear axle torque under the above different logic conditions, these embodiments can realize the real-time calculation of the distribution torque at the front axle and the rear axle under different vehicle operation conditions, and then use the vehicle multimedia to dynamically display the calculated front axle torque and rear axle torque, so as to visually display the front axle torque and the rear axle torque to the driver. Therefore, these embodiments can improve the driver's perception of the four-wheel drive state of the vehicle, thereby achieving the purpose of improving the playability of the vehicle.

In addition, embodiments further relates to a system for displaying a front axle torque and a rear axle torque of a four-wheel drive vehicle. The system is located on the vehicle, and from the integral configuration, the system comprises: an acquisition unit, a processing unit, and a display unit. The acquisition unit is configured for acquiring vehicle operation information through a vehicle controller area network. The processing unit is configured for judging a preset condition based on the acquired vehicle operation information, and calculating a torque distributed at a front axle and a torque distributed at a rear axle when a judgment result of the preset condition satisfies a requirement. The display unit is configured for displaying calculated torque distribution results at the front axle and at the rear axle.

Specifically, in the display system of this embodiment, the above processing unit can generally be, for example, integrated in the vehicle controller. The acquisition unit can be a data port unit in connection with the vehicle CAN bus network of the vehicle controller. The above display unit can adopt the multimedia interface or dashboard interface on the vehicle. It should be understood that the multimedia interface and dashboard interface usually refer to the central control display and the dashboard display of the vehicle.

When the display system of these embodiments are actually used, the specific display strategy involved can be found in the above description of the display method, thus will not be repeated here.

In addition, this embodiment also relates to a vehicle, which is provided with the above-described system for displaying the front axle torque and the rear axle torque of the four-wheel drive vehicle.

In the system for displaying the front axle torque and the rear axle torque of the four-wheel drive vehicle, as well as the vehicle provided with such system, the torque distribution at the front axle and the rear axles can be displayed visually, which enables the driver to directly perceive the four-wheel drive state, and can improve the playability of the four-wheel drive vehicle, thus having excellent usability.

The above descriptions are only preferred embodiments of the present application, and are not intended to limit the present application. Any modifications, equivalent replacements, improvements, etc. made within the spirit and principles of the present application shall be included within the protection scope of the present application.

**Claims**

1. A method for displaying a front axle torque and a rear axle torque of a four-wheel drive vehicle, **characterized in that** the method comprises:

    acquiring vehicle operation information through a vehicle controller area network;
    judging a preset condition based on the acquired vehicle operation information;
    calculating a torque distributed at a front axle and a torque distributed at a rear axle when a judgment result of the preset condition satisfies a requirement; and
    displaying calculated torque distribution results at the front axle and at the rear axle.

2. The method for displaying the front axle torque and the rear axle torque of the four-wheel drive vehicle according to claim 1, **characterized in that**

    the acquired vehicle operation information comprises: a brake pedal signal, an electronic handbrake signal, a vehicle speed signal, an accelerator pedal position signal, and a transmission gear signal; and
    in case that the brake pedal signal indicates that a brake pedal has been depressed, or the electronic handbrake signal indicates that an electronic handbrake is turned on, or the vehicle speed signal and the accelerator pedal signal are both 0, or the transmission gear signal indicates that a transmission gear is in a neutral gear or a parking gear, it is skipped displaying the front axle torque and the rear axle torque.

3. The method for displaying the front axle torque and the rear axle torque of the four-wheel drive vehicle according to claim 1, **characterized in that**

    the torque distribution results at the front axle and the rear axle are displayed in percentage; and
    in case that the calculated torque distribution results at the front axle and the rear axle are greater than 1, the torque distribution results at the front axle and the rear axle are displayed to be 100%, and/or, in case that the calculated torque distribution results at the front axle and the rear axle satisfy > 0% and $\leq$ X%, the torque distribution results at the front axle and the rear axle are both displayed to be X %, wherein $5 \leq X \leq 15$.

4. The method for displaying the front axle torque and the rear axle torque of the four-wheel drive vehicle according to claim 3, **characterized in that**
    in case that the preset condition comprises and satisfies: an engine malfunction indicator light being off, no transmission drive warning information being collected, no transmission drive failure information being collected, a vehicle speed signal being not equal to 0, and an accelerator pedal position signal being not equal to 0; the torque distribution result at the front axle Fs is:

$$Fs = \{T_1 * (\text{accelerator pedal position} / 100) / T_2 * [(\text{left rear wheel speed} + \text{right rear wheel speed}) / (\text{left front wheel speed} + \text{right front wheel speed})] * [1 - |(\text{left front wheel speed} - \text{right front wheel speed})| / (\text{left front wheel speed} + \text{right front wheel speed})] * K_1\}\%;$$

    wherein, $T_1$ and $T_2$ are optional values, and $T_1$ is between 0 Nm and 510 Nm, $T_2$ is between 280 and 350, $K_1$ is a coefficient, and $K_1$ is between 0 and 1.5.

5. The method for displaying the front axle torque and the rear axle torque of the four-wheel drive vehicle according to claim 3, **characterized in that**
    in case that the preset condition comprises and satisfies: an engine malfunction indicator light being off, no transmission drive warning information being collected, no transmission drive failure information being collected, a vehicle speed signal being equal to 0, and an accelerator pedal position signal being not equal to 0; the torque distribution result Fs at the front axle is:

$$Fs = [T_1 * (\text{accelerator pedal position} / 100) / T_2 * K_2]\%;$$

    wherein, $T_1$ and $T_2$ are optional values, $T_1$ is between 0 Nm and 510 Nm, $T_2$ is between 280 and 350, $K_2$ is a coefficient, and $K_2$ is between 0 and 1.5.

**6.** The method for displaying the front axle torque and the rear axle torque of the four-wheel drive vehicle according to claim 3, **characterized in that**
in case that the preset condition comprises and satisfies: an engine malfunction indicator light being off, no transmission drive warning information being collected, no transmission drive failure information being collected, a vehicle speed signal being not equal to 0, and an accelerator pedal position signal being equal to 0; the torque distribution result Fs at the front axle is:

$$Fs = \{\text{transmission load torque} / 100 * [(\text{left rear wheel speed} + \text{right rear wheel speed}) / (\text{left front wheel speed} + \text{right front wheel speed})] * [1 - |(\text{left front wheel speed} - \text{right front wheel speed})| / (\text{left front wheel speed} + \text{right front wheel speed})] * K_3\}\%;$$

wherein, $K_3$ is a coefficient, $K_3$ is between 0 and 1.5; and the transmission load torque is defined as 0 when the transmission load torque $\leq Y$, in which, Y is between 0 Nm and 15 Nm.

**7.** The method for displaying the front axle torque and the rear axle torque of the four-wheel drive vehicle according to claim 3, **characterized in that**
in case that the preset condition comprises and satisfies: an engine malfunction indicator light being on, or a transmission drive warning information being collected, or a transmission drive failure information being collected, a vehicle speed signal being not equal to 0, and an engine output torque being $\geq 0$; the torque distribution result Fs at the front axle is:

$$Fs = \{T_3 * (\text{engine output torque} / 100) / T_2 * [(\text{left rear wheel speed} + \text{right rear wheel speed}) / (\text{left front wheel speed} + \text{right front wheel speed})] * [1 - |(\text{left front wheel speed} - \text{right front wheel speed})| / (\text{left front wheel speed} + \text{right front wheel speed})] * K_4\}\%;$$

in which, $T_2$ and $T_3$ are optional values, $T_2$ is between 280 and 350, and $T_3$ is between 0 Nm and 510 Nm; $K_4$ is a coefficient, and $K_4$ is between 0 and 1.5.

**8.** The method for displaying the front axle torque and the rear axle torque of the four-wheel drive vehicle according to claim 3, **characterized in that**
in case that the preset condition comprises and satisfies: an engine malfunction indicator light being on, or a transmission drive warning information being collected, or a transmission drive failure information being collected, a vehicle speed signal being equal to 0, and an engine output torque being $\geq 0$; the torque distribution result Fs at the front axle is:

$$Fs = [T_3 * (\text{engine output torque} / 100) / T_2 * K_5]\%;$$

wherein, $T_2$ and $T_3$ are optional values, and $T_2$ is between 280 and 350, and $T_3$ is between 0 Nm and 510 Nm; $K_5$ is a coefficient, and $K_5$ is between 0 and 1.5.

**9.** The method for displaying the front axle torque and the rear axle torque of the four-wheel drive vehicle according to claim 3, **characterized in that**
in case that the preset condition comprises and satisfies: an engine malfunction indicator light being on, or a transmission drive warning information being collected, or a transmission drive failure information being collected, and an engine output torque being < 0; the torque distribution result Fs at the front axle is:

$$Fs = 0.$$

**10.** The method for displaying the front axle torque and the rear axle torque of the four-wheel drive vehicle according to claim 3, **characterized in that**

in case that the preset condition comprises and satisfies: (left front wheel speed + right front wheel speed) being not equal to 0, and an accelerator pedal position being not equal to 0; the torque distribution result Rs at the rear axle being a smaller value of Rs1 and Rs2, wherein:

$$\text{Rs1} = \{ \text{torque estimated by torque manager} * [1 - |(\text{left rear wheel speed} - \text{right rear wheel speed})| / (\text{left rear wheel speed} + \text{right rear wheel speed})] / 1000 * K_6 \}\%;$$

and

$$\text{Rs2} = \{T_1 * (\text{accelerator pedal position} / 100) / T_2 * [(\text{left rear wheel speed} + \text{right rear wheel speed}) / (\text{left front wheel speed} + \text{right front wheel speed})] * [1 - |(\text{left front wheel speed} - \text{right front wheel speed})| / (\text{left front wheel speed} + \text{right front wheel speed})] * K_1 \}\%;$$

wherein, $T_1$ and $T_2$ are optional values, $T_1$ is between 0 Nm and 510 Nm, and $T_2$ is between 280 and 350; $K_1$ and $K_6$ are coefficients, and both $K_1$ and $K_6$ are between 0 and 1.5; and
in case that the preset condition comprises and satisfies that (left front wheel speed + right front wheel speed) is equal to 0, it is skipped displaying the torque distribution result Rs at the rear axle.

11. The method for displaying the front axle torque and the rear axle torque of the four-wheel drive vehicle according to claim 3, **characterized in that**

in case that the preset condition comprises and satisfies: (left rear wheel speed + right rear wheel speed) being not equal to 0 and an accelerator pedal position being equal to 0; the torque distribution result Rs at the rear axle is a smaller value of Rs3 and Rs4, wherein:

$$\text{Rs3} = \{ \text{torque estimated by torque manager} * [1 - |(\text{left rear wheel speed} - \text{right rear wheel speed})| / (\text{left rear wheel speed} + \text{right rear wheel speed})] / 1000 * K_6 \}\%;$$

$$\text{Rs4} = \{ \text{transmission load torque} / 100 * [(\text{left rear wheel speed} + \text{right rear wheel speed}) / (\text{left front wheel speed} + \text{right front wheel speed})] * [1 - |(\text{left front wheel speed} - \text{right front wheel speed})| / (\text{left front wheel speed} + \text{right front wheel speed})] * K_3 \}\%;$$

wherein, $K_3$ and $K_6$ are coefficients, both $K_3$ and $K_6$ are between 0 and 1.5; and the transmission load torque is defined as 0 when the transmission load torque $\leq Y$, in which, Y is between 0 Nm and 15 Nm;
in case that the preset condition comprises and satisfies: (left rear wheel speed + right rear wheel speed) being equal to 0, it is skipped displaying the torque distribution result Rs at the rear axle.

12. The method for displaying the front axle torque and the rear axle torque of the four-wheel drive vehicle according to claim 3, **characterized in that**
in case that the preset condition comprises and satisfies: (left rear wheel speed + right rear wheel speed) being equal to 0 and an accelerator pedal position being not equal to 0; the torque distribution result Rs at the rear axle is:

$$\text{Rs} = \{ \text{torque manager estimated torque} / 1000 * K_7 \}\%;$$

in which, $K_7$ is a coefficient, and $K_7$ is between 0 and 1.5.

13. A system for displaying a front axle torque and a rear axle torque of a four-wheel drive vehicle, **characterized in that**, the system is located on the vehicle, and comprises:

an acquisition unit, the acquisition unit being configured for acquiring vehicle operation information through a vehicle controller area network;
a processing unit, the processing unit being configured for judging a preset condition based on the acquired vehicle operation information, and calculating a torque distributed at a front axle and a torque distributed at a rear axle when a judgment result of the preset condition satisfies a requirement; and
a display unit, the display unit being configured for displaying calculated torque distribution results at the front axle and at the rear axle.

14. The system for displaying the front axle torque and the rear axle torque of the four-wheel drive vehicle according to claim 13, **characterized in that** the display unit is a central control display or a dashboard display of the vehicle.

15. A vehicle, **characterized in that** the vehicle is provided with the system for displaying the front axle torque and the rear axle torque of the four-wheel drive vehicle according to claim 13 or 14.

EP 4 311 704 A1

```
┌─────────────────────────────────────────┐
│ acquiring vehicle operation information  │
└─────────────────────────────────────────┘
                    │
                    ▼
              ╱─────────────╲
            ╱  judging a preset ╲        no    ┌────────────────────────────────────────┐
          ╱ condition based on the ╲──────────▶│ skipping displaying the front axle torque│
          ╲   vehicle operation    ╱           │ and the rear axle torque                 │
            ╲   information        ╱           └────────────────────────────────────────┘
              ╲─────────────╱
                    │ yes
                    ▼
┌─────────────────────────────────────────┐
│ calculating a torque distributed at a    │
│ front axle and a torque distributed at a │
│ rear axle                                │
└─────────────────────────────────────────┘
                    │
                    ▼
┌─────────────────────────────────────────┐
│ displaying the front axle torque and the │
│ rear axle torque                         │
└─────────────────────────────────────────┘
```

FIG. 1

```
┌─────────────────────────┐
│                         │   10
│    acquisition unit     │
│                         │
└─────────────────────────┘
            │
            │
┌─────────────────────────┐
│                         │   20
│    processing unit      │
│                         │
└─────────────────────────┘
            │
            │
┌─────────────────────────┐
│                         │   30
│      display unit       │
│                         │
└─────────────────────────┘
```

FIG. 2

## INTERNATIONAL SEARCH REPORT

| | |
|---|---|
| International application No. | |
| | **PCT/CN2021/143761** |

**A.    CLASSIFICATION OF SUBJECT MATTER**

B60K 35/00(2006.01)i;  B60W 40/00(2006.01)i

According to International Patent Classification (IPC) or to both national classification and IPC

**B.    FIELDS SEARCHED**

Minimum documentation searched (classification system followed by classification symbols)

B60K,B60W

Documentation searched other than minimum documentation to the extent that such documents are included in the fields searched

Electronic data base consulted during the international search (name of data base and, where practicable, search terms used)

WPABSC; CNTXT; ENTXT; CNKI: 扭矩, 显示, 信息, 计算, 四驱, 前桥, 后桥, 速度, 油门, 手刹, 变速器, 制动; torque, display, information, calculat+, 4WD, front axle, rear axle, speed, accelerator+, park+, transmission, brak+

**C.    DOCUMENTS CONSIDERED TO BE RELEVANT**

| Category* | Citation of document, with indication, where appropriate, of the relevant passages | Relevant to claim No. |
|---|---|---|
| X | CN 104477116 A (CHONGQING CHANG'AN AUTOMOBILE CO., LTD.) 01 April 2015 (2015-04-01)<br>    description, paragraphs 0005-0009 | 1-3, 13-15 |
| A | CN 108791274 A (GREAT WALL MOTOR CO., LTD.) 13 November 2018 (2018-11-13)<br>    entire document | 1-15 |
| A | WO 0032462 A1 (GRANT, V. J. et al.) 08 June 2000 (2000-06-08)<br>    entire document | 1-15 |
| A | CN 108237949 A (JIANGSU CHJ AUTOMOTIVE CO., LTD.) 03 July 2018 (2018-07-03)<br>    entire document | 1-15 |

☐ Further documents are listed in the continuation of Box C.      ☑ See patent family annex.

| | | |
|---|---|---|
| * | Special categories of cited documents: | |
| "A" | document defining the general state of the art which is not considered to be of particular relevance | "T"  later document published after the international filing date or priority date and not in conflict with the application but cited to understand the principle or theory underlying the invention |
| "E" | earlier application or patent but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| **17 March 2022** | **01 April 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/143761**

| Patent document cited in search report | | | Publication date (day/month/year) | Patent family member(s) | | | Publication date (day/month/year) |
|---|---|---|---|---|---|---|---|
| CN | 104477116 | A | 01 April 2015 | CN | 104477116 | B | 26 October 2016 |
| CN | 108791274 | A | 13 November 2018 | None | | | |
| WO | 0032462 | A1 | 08 June 2000 | NZ | 512625 | A | 30 January 2004 |
| | | | | AU | 1644600 | A | 19 June 2000 |
| | | | | AU | 770118 | B2 | 12 February 2004 |
| CN | 108237949 | A | 03 July 2018 | CN | 108237949 | B | 13 August 2021 |

Form PCT/ISA/210 (patent family annex) (January 2015)

**REFERENCES CITED IN THE DESCRIPTION**

**Patent documents cited in the description**

- CN 202110319453